Europäisches Patentamt

European Patent Office

Office européen des brevets

(11) Publication number: **0 078 309**
**B1**

(12) **EUROPEAN PATENT SPECIFICATION**

(45) Date of publication of patent specification: **30.01.85**

(21) Application number: **82901808.4**

(22) Date of filing: **28.04.82**

(86) International application number:
**PCT/US82/00550**

(87) International publication number:
**WO 82/03926 11.11.82 Gazette 82/27**

(51) Int. Cl.⁴: **G 03 B 17/02**

(54) **CAMERA DOOR MECHANISM.**

(30) Priority: **06.05.81 US 260866**

(43) Date of publication of application:
**11.05.83 Bulletin 83/19**

(45) Publication of the grant of the patent:
**30.01.85 Bulletin 85/05**

(84) Designated Contracting States:
**DE GB**

(56) References cited:
**DE-C- 949 324**
**FR-A-1 061 678**
**GB-A- 722 587**
**GB-A-1 110 057**
**US-A-2 566 267**
**US-A-3 432 967**

(73) Proprietor: **EASTMAN KODAK COMPANY**
**343 State Street**
**Rochester New York 14650 (US)**

(72) Inventor: **HARVEY, Donald Malcolm**
**207 Oak Point Trail**
**Webster, NY 14580 (US)**

(74) Representative: **Blickle, K. Werner, Dipl.-Ing.**
**et al**
**KODAK AKTIENGESELLSCHAFT Postfach 369**
**D-7000 Stuttgart 60 (DE)**

Courier Press, Leamington Spa, England.

## Description

The present invention relates generally to a camera including a supply chamber for receiving a film container end first with a film leader extending from the container, a film path extending from the supply chamber, a pressure plate movable towards and away from the film path, a door movable between closed and fully open positions, the door including a back portion which in a closed position of the door protects the inside of the camera, the door also including a further portion which in the closed position of the door closes the supply chamber, movement of the door to the closed position moving the pressure plate towards the film path.

A camera generally of the type described in which the film container is loaded into the camera by movement of the container parallel to its axis, which axis is that of rotation of film in moving out of the container, is e.g. known from US—A—2,566,267. Before any film is loaded in the camera end first, a back door is completely opened in order to move a film pressure plate supported by the back door from interference with the intended film path. When the camera is opened to such an extent for film loading, its interior is accessible. This allows dust and other foreign particles to enter the camera interior, which can damage or hinder operation of the lens or other interior parts. Moreover, opening such cameras for film loading allows the user to touch such interior parts and damage or soil them. The same problems exist with other known cameras, such as the Leica M5 camera or as disclosed in German Patent DE—A—949,324, where the film supply chamber is opened at the bottom of the camera by removing a baseplate or by opening a bottom door of the camera, while a back door needs to be fully opened before any film container can be loaded into these cameras.

It is the object of the invention to provide a camera in which the film container is loaded into the camera by movement of the container parallel to its axis but in which interior parts of the camera are protected during film loading.

This object is accomplished by a camera door mechanism which includes a blocking mechanism for inhibiting opening of a back portion of the camera door mechanism beyond a position at which the back door protects the inside of the camera as characterized in claim 1.

According to a preferred embodiment of the present invention, the further portion of the door is at the bottom of the door, the further portion and the back portion are unitary, and the door further includes a top portion and side portions unitary with the back and further portions, the door being connected to the remainder of the camera by a hinge mechanism perpendicular to the bottom of the camera along a side of the camera remote from the supply chamber, with such a single door structure, the inside can be well protected by the bottom portion and top and side portions which overlap the bottom, top and sides of the camera.

Fig. 1 is a perspective view of the photographic camera having a camera door mechanism in accordance with a preferred embodiment of the invention;

Fig. 2 is a perspective view of the photographic camera, showing the camera door mechanism opened to partially opened position substantially protecting the camera interior but uncovering the camera body for film loading;

Fig. 3 is a perspective view of the photographic camera, showing the camera door opened to a fully opened position completely uncovering the camera to allow access to the camera interior; and

Fig. 4 is an elevation view of the photographic camera, showing a latch mechanism for holding the camera door closed and in its partially opened, loading position.

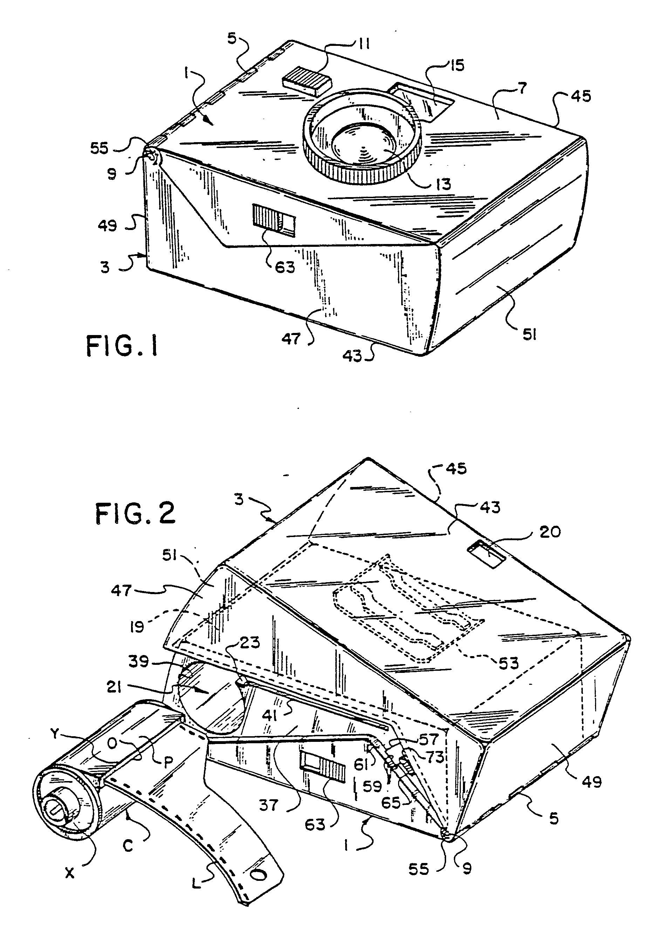

Referring now to the drawings, and in particular to Figs. 1 and 2, there is shown a bottom-loaded 35 mm camera 1 for receiving a film container C, such as a conventional 35 mm film container. A core member X, rotatably mounted in the film container C, supports a coiled 35 mm filmstrip having a normally curled leader L. The film leader L longitudinally extends out of a light-tight opening O in a lipped portion Y of the film container C.

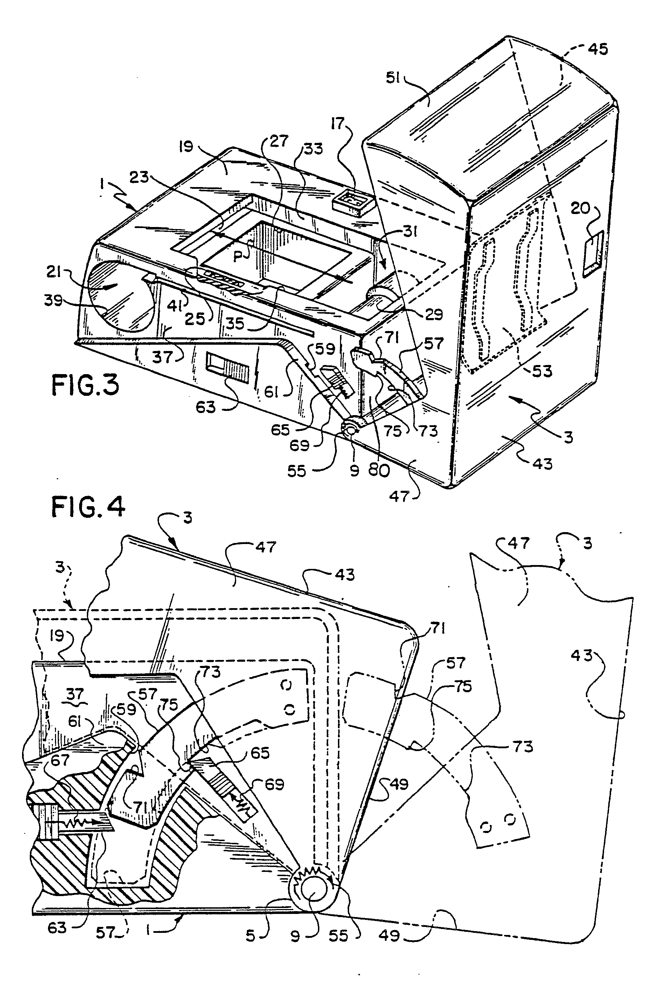

The camera 1, includes a unitary door 3, although other embodiments, such as a compound or multi-element cover door, may be used. An example of a compound door is disclosed in commonly assigned copending U.S. Patent Application Serial No. 260,876, entitled camera door apparatus, and filed on May 6, 1981, in the name of Neil G. Seely, corresponding to PCT International Application No. US 82/00551, filed April 28, 1982. A hinge mechanism 5, located adjacent a front wall 7 and a side wall 80 of the camera 1, shown in Figs. 1 and 3, supports the door 3 for pivotal opening and closing movement about a pivot axis concentric with a pin member 9 of the hinge mechanism. On the front wall 7 of the camera 1, there is illustrated in Fig. 1, a depressible shutter release button 11, a picture-taking lens 13, which may be fixed or variable focus, and a front viewfinder window 15. A rear viewfinder window 17, located on a back 19 of the camera 1 in alignment with the front viewfinder window 15, and a viewing aperture 20, located in the camera door 3 for looking through the viewfinder windows, are illustrated in Fig. 3.

The camera 1, as shown in Fig. 3, is open at the back 19 to provide access to the camera interior for a number of conventional purposes, such as clearing a film jam, and cleaning or repairing an interior mechanism. A supply chamber 21 in the camera 1 is shaped to receive and hold the film container C. Known means, not shown, in the supply chamber 21, rotatably supports the core member X of the film container C during film advance and film rewind in the camera. A slot-like extension 23 of the supply chamber 21 holds the lipped portion Y of the film container C to prevent rotation of the film container as the filmstrip is moved. Film advance and film rewind may be accomplished using commonplace drive mechanisms and, in this connection, there is illustrated in Fig. 3, a sprocket wheel 25 for engaging and advancing the filmstrip. As is customary, film advance is from the slot-like extension 23 of the supply chamber 21, across a film gate 27, and onto a take-up spool 29, rotatably mounted within a take-up chamber 31 in the camera 1. Two parallel walls 33 and 35 or other suitable means, such as guide rails or guide rollers, not shown, define a film passageway or a film path, indicated by a double-headed arrow P in Fig. 3, for guiding film between the slot-like extension 23 and the take-up chamber 31.

The supply chamber 21, as shown in Fig. 3, is only accessible for container-loading at a bottom 37 of the camera 1, through an entrance opening 39 to the supply chamber. The film passageway P is accessible for leader-loading at the bottom 37 of the camera 1, through an elongate opening 41 to the film passageway P in the wall 35. The entrance opening 39 and the elongate opening 41, together, define a single continuous opening in the bottom 37 for inserting the film container C endwise, i.e., axially, into the supply chamber 21 and for inserting the film leader L edgewise, i.e., longitudinal edge first, into the film passageway P. To load the film container C and the film leader L into the camera, the film leader should be slightly shorter in length than that of the elongate opening 41, as shown in Fig. 2. This may be accomplished either by drawing out or winding in an appropriate length of the film leader L, through the light-tight opening O in the film container C. Then, the film leader L, which is normally curled, is held straight and inserted edgewise through the elongate opening 41 and, at the same time, the film container C, is inserted endwise through the entrance opening 39. Means may be provided, such as disclosed in copending commonly assigned U.S. Patent Application Serial No. 260,875, entitled film loading apparatus, and filed on May 6, 1981, in the name of Neil G. Seely, (corresponding PCT International Patent Application No. 45 82/004,74 filed April 15, 1982) for automatically uncurling the film leader L for movement into the elongate opening 41 as the film container C is moved into the entrance opening 39. Following loading of the film container C and the film leader L into the camera and, preferably, after the door 3 is closed, as in Fig. 1, a suitable mechanism, not shown, couples the film leader to the sprocket wheel 25 and initiates film advance to thread the film leader onto the take-up spool 29.

The door 3, comprises a back portion 43, a top portion 45, a bottom portion 47, identical in shape to the top portion, and two similar side portions 49 and 51. With the illustrated arrangement of respective cover portions, the door 3 in a partially opened position, as shown in Fig. 2, substantially protects the camera interior by enclosing the back 19 of the camera 1. However, limited access is allowed to the camera interior for film loading, through the continuous bottom opening defined by the connected openings 39 and 41 to the supply chamber 21 and the film passageway P. Conversely, the door 3 in a fully opened position, as shown in Fig. 3, allows much greater or direct access to the camera interior by uncovering the back 19 of the camera 1. Accordingly, the door 3 in the partially opened position substantially shields the camera interior during film loading from foreign particles, fingerprints, and tampering with an interior mechanism. The door in the fully opened position allows access to the camera interior should it become necessary, for example, to clear a film jam in the camera or to repair or clean an interior mechanism.

A spring-urged pressure plate 53, shown in Figs. 2 and 3, is mounted on the inside of the back portion 43 of the door 3. When the door 3 is in a closed position, the pressure plate 53 is located adjacent the film passageway P, to hold a section of filmstrip from the film container C substantially flat and in close proximity to the film gate 27 during picture-taking. However, the pressure plate 53 is moved with the back portion 43 to the partially opened position, in Fig. 2, away from the film passageway P, to provide space for inserting the film leader L through the elongate opening 41 to the film passageway.

According to the invention, a blocking mechanism inhibits the back portion 43 from opening beyond a position at which the back portion 43 protects the inside of the camera. The blocking mechanism can be an overridable detent. However, in the preferred embodiment shown, the blocking mechanism is a releasable latch mechanism. The detent has the advantage of allowing easier access to the camera interior, but the latch is preferable with the inexpert operator because it forces the operator to positively release it to remove the protection of the door 3.

The latch mechanism is best shown in Figs. 3 and 4 holding the door 3 in the closed and partially opened positions against the opening urging of a spring 55, located adjacent the hinge mechanism 5. The latch mechanism includes an arcuate notched finger 57, fixed to the inside of the bottom portion 47 of the door 3 and receivable in an arcuate channel 59 in a raised piece 61 on the bottom 37 of the camera 1. Two manually slidable locking or latching elements 63 and 65 are located on the raised piece 61 and the bottom 37 of the camera 1 and are urged by respective springs 67 and 69 to engage the notched finger 57 at a V-shaped notch 71 and an elongate notch 73. As shown in Fig. 4, the locking element 63 releasably secures the door 3 in the closed position by engaging the arcuate finger 57 at the notch 71, and the locking element 65 blocks the door from being opened farther than the partially opened position by engaging the arcuate finger at an edge 75 in the notch 73. Preferably, the locking element 65 is covered by the bottom portion 47 of the door 3 in the closed position, to prevent that locking element from being manually moved. The locking element 65 is uncovered once the door 3 is opened to the partially opened position, to permit withdrawal of that locking element from the notch 73 in order to open the door to the fully opened position.

## Claims

1. A camera including a supply chamber (21) for receiving a film container end first with a film leader extending from the container, a film path (P) extending from the supply chamber, a pressure plate (53) movable towards and away from the film path, a door (3) movable between closed and fully open positions, the door (3) including a back portion (43) which in a closed position of the door protects the inside of the camera, the door also including a further portion (47) which in the closed position of the door closes the supply chamber (21), movement of the door to the closed position moving the pressure plate (53) towards the film path, characterized in that there is provided a blocking mechanism (65, 75) for inhibiting opening of the door (3) beyond a partially open position in which the pressure plate (53) is away from the film path, the back portion (43) of the door protecting the inside of the camera and the door allowing loading and unloading of the camera with a film container (C).

2. Camera according to claim 1, wherein the further portion (47) of the door is at the bottom of the door, the further portion (47) and the back portion (43) are unitary, and the door further includes a top portion (45) and side portions (49 and 51) unitary with the back and further portions, the door being connected to the remainder of the camera by a hinge mechanism (5) perpendicular to the bottom of the camera along a side of the camera remote from the supply chamber (21).

3. A camera according to claim 1 or 2, wherein the blocking mechanism is a detent.

4. A camera according to claim 1 or 2, wherein the blocking mechanism is a latch mechanism (65, 75).

## Revendications

1. Un appareil photographique de prise de vues comprenant un compartiment débiteur (21) pour recevoir, d'abord par une extrémité, un conteneur de film dont l'amorce du film déborde du conteneur, un couloir de film (P) qui part du compartiment débiteur, une plaque de pression (53) mobile vers et à l'écart du couloir de film, une porte (3) mobile entre des positions de fermeture et de pleine ouverture, la porte (3) comportant une partie dorsale (43) qui protège l'intérieur de l'appareil quand elle est fermée, la porte comportant une partie supplémentaire (47) qui ferme le compartiment débiteur (21) quand elle est fermée, le déplacement de la porte vers la position de fermeture entraînant la plaque de pression (53) vers le couloir de film, caractérisé en ce qu'il comprend un mécanisme de blocage (65, 75) pour empêcher l'ouverture de la porte (3) au-delà d'une position d'ouverture partielle dans laquelle la plaque de pression (53) est écartée du couloir de film, la partie dorsale (43) de la porte protégeant l'intérieur de l'appareil et la porte autorisant le chargement et le déchargement de l'appareil avec un conteneur de film (C).

2. Appareil conforme à la revendication 1, dans lequel la partie supplémentaire (47) de la porte est située à la base de la porte, la partie supplémentaire (47) et la partie dorsale sont solidaires, et la porte comprend en outre une partie supérieure (45) et des parties latérales (49 et 51) solidaires des parties dorsale et supplémentaire, la porte étant reliée au reste de l'appareil par un mécanisme à charnière (5) perpendiculaire au fond de l'appareil suivant un côté de l'appareil éloigné du compartiment débiteur (21).

3. Appareil conforme à la revendication 1 ou 2, dans lequel le mécanisme de blocage est un cliquet.

4. Appareil conforme à la revendication 1 ou 2, dans lequel le mécanisme de blocage est un mécanisme de verrouillage (65, 75).

## Patentansprüche

1. Kamera mit einer Filmvorratskammer (21) zur Aufnahme eines Filmbehälters, dessen Ende zuerst eingeführt wird und aus dem ein Filmanfang herausragt, mit einer von der Filmvorratskammer ausgehenden Filmführungsbahn (P), mit einer Andruckplatte (53), die zur Filmführungsbahn hin- und von ihr wegbewegbar ist, und mit einer zwischen einer geschlossenen und einer vollständig geöffneten Stellung bewegbaren Klappe (3), die einen hinteren, in einer geschlossenen Stellung der Klappe das Innere der Kamera schützenden Abschnitt (43) sowie einen weiteren Abschnitt (47) aufweist, der in der geschlossenen Stellung der Klappe die Filmvorratskammer (21) schließt, wobei durch die Bewegung der Klappe in ihre geschlossene Stellung die Andruckplatte (53) zur Filmführungsbahn hin bewegt wird, dadurch gekennzeichnet, daß eine Blockiervorrichtung (65, 75) vorgesehen ist, die ein Öffnen der Klappe (3) über eine teilweise offene Stellung hinaus verhindert, in der die Andruckplatte (53) von der Filmführungsbahn wegbewegt ist, wobei der hintere Abschnitt (43) der Klappe das Innere der Kamera schützt und die Klappe das Einlegen eines Filmbehälters (C) in die Kamera wie auch dessen Entnahme ermöglicht.

2. Kamera nach Anspruch 1, dadurch gekennzeichnet, daß sich der weitere Abschnitt (47) der Klappe im unteren Teil der Kappe befindet und mit dem hinteren Abschnitt (43) eine Einheit bildet und daß die Klappe außerdem einen oberen Abschnitt (45) und Seitenteil (49 und 51) aufweist, die mit dem hinteren und dem weiteren Abschnitt eine Einheit bilden, wobei die Klappe mit der übrigen Kamera durch einen Anlenkmechanismus (5) verbunden ist, der senkrecht zur Unterseite der Kamera längs einer von der Filmvorratskammer (21) abliegenden Seite der Kamera verläuft.

3. Kamera nach Anspruch 1 oder 2, dadurch gekennzeichnet, daß die Blockiervorrichtung eine Rastklinke ist.

4. Kamera nach Anspruch 1 oder 2, dadurch gekennzeichnet, daß die Blockiervorrichtung ein Riegelmechanismus (65, 75) ist.

0 078 309

FIG. 1

FIG. 2

1

FIG.3

FIG.4